# EUROPÄISCHE PATENTSCHRIFT

(11) **EP 2 876 345 B1**
(45) Veröffentlichungstag und Bekanntmachung des Hinweises auf die Patenterteilung: **29.03.2017**
(21) Anmeldenummer: 13194065.2
(22) Anmeldetag: 22.11.2013
(51) Int. Cl.: B29C 45/14, F16L 37/092, B29L 23/00

(54) **System zur Steckverbindung von Rohren**
System for the plug-in connection of tubes
Système de raccordement de tubes à fiches

(43) Veröffentlichungstag der Anmeldung: 27.05.2015
(73) Patentinhaber: Systemvertrieb Jäger GmbH Sanitär- und Heizungstechnik, 6845 Hohenems (AT)
(72) Erfinder: Gandolfi, Andrea, I-46043 Castiglione delle Stiviere (IT)
(74) Vertreter: Müller, Enno

(56) Entgegenhaltungen:
- EP-A1- 0 197 670
- EP-A1- 2 397 741
- EP-A1- 2 508 783
- EP-A2- 1 465 309
- DE-U1- 29 621 046
- US-A- 5 692 785

## Beschreibung

Die Erfindung betrifft ein System zur Steckverbindung von Rohren nach den Merkmalen des Oberbegriffes des Anspruches 1.

Derartige Systeme zur Steckverbindung von Rohren sind insbesondere in der Haustechnik bekannt. Versorgungsrohre wie insbesondere Rohre eines Heizungssystems können so einfach und sicher miteinander verbunden werden.

Zum Stand der Technik ist grundsätzlich beispielsweise auf die EP 1 669 656 A1 und die DE 10 2006 015 158 B4 zu verweisen. Darüber hinaus aber auch auf die DE 195 24 934 A1, die WO 03/021143 A1 und die DE 94 00 545 U1.

Aus der DE 296 21 046 U1 ist ein weiteres derartiges System bekannt, bei welchem Dichtungsringe in innenseitigen Nuten in Außenhülse einliegen. Aus der EP 2 508 783 A1 ist ein System bekannt, bei welchem ein Indikatorteil vorgesehen ist, welches angezeigt, ob ein Rohr in die Steckverbindung vorschriftsmäßig eingeführt. Ein Fortsatz des Indikatorteils durchsetzt zunächst, wenn das Rohr noch nicht eingeführt ist, durch eine große Öffnung die Außenhülse. Im Zuge des Einschieben des Rohres wird das Indikatorteil von der Stirnfläche des Rohres vorgeschoben und das die Außenhülse durchsetzende Teil nach innen eingezogen.

Aus der EP 1465 309 A2 ist ein Verbindungssystem zur Verbindung von Schutzelementen für Elektroinstallationen bekannt, bei welchem eine Hülse eine Dichtung aufweist, die bis in eine Außenfläche der Hülse vorragend einen Fortsatz aufweist.

Ausgehend von dem dargelegten Stand der Technik beschäftigt sich die Erfindung mit der Aufgabenstellung, ein System zur Steckverbindung von Rohren mit einer Innenhülse und einer Außenhülse, wobei die Außenhülse abdichtend auf einem einzusteckenden Rohr aufliegen kann, anzugeben, das bei einfacher Herstellbarkeit eine möglichst hohe Zuverlässigkeit und Nutzen aufweist.

Diese Aufgabe ist beim Gegenstand des Anspruches 1 gelöst, wobei darauf abgestellt ist, dass der Dichtwerkstoff der umlaufenden Dichtung zumindest an einer Stelle der Wandung die Außenhülse durchsetzt und im Kunststoffspritzverfahren eingebracht ist, dass die Außenhülse in Einsteckrichtung des Rohres nach der ersten Dichtung eine zweite umlaufende Dichtung zur Zusammenwirkung mit einer Außenfläche des eingeschobenen Rohres aufweist, dass der Dichtstoff der zweiten umlaufenden Dichtung zumindest an einer Stelle die Wandung der Außenhülse durchsetzt und im Kunststoffspritzverfahren eingebracht ist und dass mit der ersten und zweiten Dichtung materialeinheitlich integral ein Stoßschutzvorsprung ausgebildet ist, der sich in radialer Richtung über eine Außenfläche der Außenhülse erhebt.

Es ist ein System geschaffen, das die günstige Dichtwirkung durch eine auf eine Außenfläche des Rohres im zusammengesteckten Zustand wirkende Dichtung der Außenhülse beibehält, zumal durch die unterschiedlich gewählten Werkstoffe zwischen der Dichtung der Außenhülse und der Außenhülse selbst ein für die Dichtwirkung günstiger Werkstoff wählbar ist, bei dem aber zugleich durch die feste Verbindung der Dichtung mit der Außenhülse, die zudem durch die Durchsetzung der Wandung der Außenhülse durch den Dichtwerkstoff gleichsam formschlüssig, unter Umständen ergänzend, gegeben ist, eine hohe Sicherheit erreicht ist. Das System ist auch mit einer günstigen Herstellbarkeit verbunden. Der die Wandung der Außenhülse durchsetzende Dichtstoff ist im Kunststoffspritzverfahren günstig eingebracht. Hinsichtlich der Außenhülse insgesamt kann auch im Zweikomponenten- Spritzverfahren vorgegangen werden.
Die Außenhülse weist weiter in Einsteckrichtung des Rohres nach der ersten Dichtung eine zweite umlaufende Dichtung zur Zusammenwirkung mit der Innenhülse auf, wobei der Dichtwerkstoff der zweiten umlaufenden Dichtung zumindest an einer Stelle die Wandung der Außenhülse durchsetzt und die zweite umlaufende Dichtung mit der Wandung der Außenhülse fest verbunden ist.

Die zweite umlaufende Dichtung ist in gleicher Weise ausgebildet und hergestellt wie die erste umlaufende Dichtung. Sie kann insbesondere in gleicher Weise im Zweikomponenten-Spritzverfahren beispielsweise zusammen mit der Außenhülse hergestellt sein.

Die Stoßschutzvorsprünge können die Außenhülse außenseitig schützen. Dies kann sich beispielsweise als vorteilhaft erweisen, wenn eine Vielzahl von Außenhülsen herstellungsmäßig in einem Sammelbehältnis angeordnet sind oder hineinfallen. Es kann sich aber auch auf einer Baustelle als vorteilhaft erweisen, dass somit eine Abstützung gegen benachbarte Bereiche, die etwa vor Kratzern oder weiteren Verletzungen zu schützen sind, erreicht werden kann.

Ein solcher Stoßschutzvorsprung ist materialeinheitlich integral mit der ersten und zweiten umlaufenden Dichtung ausgebildet. Ein Stoßschutzvorsprung erhebt sich in radialer Richtung über eine Außenfläche der Außenhülse. Beispielsweise wulstartig. Er kann über den Umfang unterbrochen ausgebildet sein oder auch, vergleichbar der inneren umlaufenden Dichtung, umlaufend zusammenhängend ausgebildet sein.

Entsprechend ist auch für den Stoßschutzvorsprung bevorzugt, dass er an einer oder mehreren Stellen die Wandung der Außenhülse durchsetzt. Auch der Stoßschutzvorsprung ist somit fest an der Außenhülse gehaltert. Er kann zugleich im Zweikomponenten-Kunststoffspritzverfahren hergestellt werden.

Die Ausgestaltung und Befestigung der ersten und/ oder zweiten umlaufenden Dichtung und/ oder der genannten Stoßschutzvorsprünge kann insbesondere vorgesehen sein, dass ohne eine zerstörende Einwirkung auf die Außenhülse und/ oder den Werkstoff der ersten und/ oder zweiten umlaufenden Dichtung und/ oder der Stoßschutzvorsprünge keine Trennung der ersten und/ oder zweiten umlaufenden Dichtung und/oder der Stoßschutzvorsprünge von der Außenhülse möglich ist.

Insbesondere ist auch bevorzugt, dass bezogen auf einen Längsquerschnitt durch die Außenhülse ein Stoßschutzvorsprung und die erste und/oder zweite umlaufende Dichtung radial zueinander ausgerichtet angeordnet sind.

Es ist auch bevorzugt, dass die erste und/oder zweite umlaufende Dichtung im Querschnitt zahnartig gebildet ist. Die zahnartige Ausbildung der Dichtung lässt eine hohe Komprimierung im zusammengesteckten Zustand erreichen und zudem auch einen durch die Dichtung, in Abhängigkeit des dafür gewählten Materials, mit gegebenen Effekt erreichen, der eine Auszugssicherung des eingesteckten Rohres erhöht.

Eine im Querschnitt zahnartig ausgebildete Dichtung kann bevorzugt eine steilere und eine flachere Flanke aufweisen. Hierbei ist "steil" und "flach" im Hinblick auf einen Winkel zu sehen, welchen die jeweilige Flanke der Dichtung mit einer durch die Spitze der zahnartigen Ausbildung gehenden Geraden einschließt, die in Bezug auf eine Mittelachse der Außenhülse senkrecht steht.

Im weiterer Bevorzugung ist vorgesehen, dass die flachere Flanke der Dichtung der Außenhülse die in Einsteckrichtung erste Flanke ist. Das einzusteckende Rohr läuft also auf eine vergleichsweise sich flach erstreckende, also einen großen Winkel mit der genannten Geraden einschließende Flanke der Dichtung auf. Dies begünstig ein Überlaufen der Dichtung beim Einstecken durch das einzusteckende Rohr.

Dagegen ist weiter bevorzugt die steilere Flanke der Dichtung der Außenhülse rückseitig zu der flacheren Flanke ausgebildet. So kann ein widerhakenartiger Effekt hinsichtlich der Dichtung erreicht werden.

Im Hinblick auf das System ist auch bevorzugt, dass die Innenhülse eine oder mehrere in Axialrichtung der Innenhülse hintereinander angeordnete Dichtungen aufweist.

Die Dichtungen der Außenhülse und/oder die Dichtungen der Innenhülse sind bevorzugt umlaufend, weiter bevorzugt umlaufend mit demselben Querschnitt, ausgebildet.

Eine Dichtung der Innenhülse ist gleichfalls bevorzugt im Querschnitt zahnartig gebildet, auch bevorzugt mit unterschiedlich steilen Flanken, wobei sich die Steilheit auch im Hinblick auf die genannte Gerade, nunmehr bezogen auf eine Achse der Innenhülse, zu der die Gerade rechtwinklig verläuft, ergibt. Eine flachere Flanke der Dichtung der Innenhülse ist auch bevorzugt einsteckseitig des einzusteckenden Rohres ausgebildet und die steilere Flanke entsprechend rückseitig zu der flacheren Flanke.

Hinsichtlich des Klemmteils ist weiter bevorzugt, dass eine Zahnausformung einsteckseitig eine Einführschräge aufweist. Die Zahnausformung ist entsprechend auch hier mit unterschiedlichen Flankenwinkeln gebildet, wobei im Hinblick auf die Einführschräge die flachere Flanke ebenfalls einsteckseitig des einzusteckenden Rohres ausgebildet ist. Auch bezüglich des Klemmteils ist die Steilheit einer Flanke eines Halterungsvorsprungs im Bezug auf eine Gerade zu sehen, die durch eine Spitze des Halterungsvorsprungs verläuft und senkrecht zu einer Mittelachse des Klemmteils steht. Hierbei schließt ersichtlich die flachere Flanke einen größeren Winkel mit dieser Geraden ein als die steilere Flanke.

Für alle genannten steileren oder flacheren Flanken ist bevorzugt, dass eine flachere Flanke einen Winkel im Bereich von 30° bis 70° mit der jeweils genannten Geraden einschließt und eine steilere Flanke einen Winkel von 0° bis 45°.

Das Klemmteil kann zunächst ein Metallteil sein. Insbesondere auch ein durch Drehen hergestelltes Metallteil. Weiter kann das Klemmteil auch aus einem Kunststoff bestehen und bevorzugt ein Kunststoffspritzteil sein.

Im Hinblick auf das Klemmteil ist weiter bevorzugt, dass eine Zahnspitze einer Zahnausformung gegenüber einem sich in Einstreckrichtung anschließenden Wandbereich des Klemmteils vorragend ausgebildet ist. Entsprechend lässt sich ein solches Klemmteil beispielsweise nicht in einfacher Weise, ohne dass Weiteres erforderlich wäre, aus einem Rohrteil herstellen. Vielmehr muss entweder eine entsprechende Umformung wie etwa Umbiegung erfolgen oder etwa eine beispielsweise durch Drehen, insbesondere bezogen auf ein Metallteil, erfolgte Ausnehmung des Wandbereiches, der sich an die Zahnausformung in der beschriebenen Weise anschließt.

Der genannte anschließende Wandbereich kann eine axiale Länge des Klemmteils betreffen, die einem Drittel bis zum Zweifachen eines freien Durchmessers des Klemmteils in diesem Wandbereich entspricht.

Es ist bevorzugt, dass eine im Querschnitt als Zahnspitze erscheinende Eingriffskante des Klemmteils über ihre Länge, also in Umfangsrichtung gesehen, unterschiedlichen Abstand zu einer zentralen Längsachse des Klemmteils aufweist. So können im Hinblick auf die Einwirkungen auf ein zu klemmendes Rohr innerhalb einer in Umfangsrichtung umlaufenden Eingriffskante Spitzenbereiche geschaffen werden. Insbesondere lässt sich hierdurch ein jedenfalls anfänglich bereits sicheres Festhalten eines eingesteckten Rohres erreichen. Sollte eine Axialkraft in Ausziehrichtung auf das Rohr wirken, gräbt sich eine Eingriffskante, ausgehend von den Spitzen, unter Verstärkungswirkung der Halterung in die Rohrwandung ein.

Das Klemmteil ist weiter bevorzugt mit einzelnen, sich in Achsrichtung erstreckenden Klemmfingern ausgebildet. Entsprechend ist eine Halterungsausformung bevorzugt nicht integral, also unterbrechungsfrei umlaufend vorgesehen, sondern mit jedenfalls zur Darstellung der einzelnen Klemmfinger gegebenen Unterbrechungen.

Insbesondere im Bezug auf die Klemmfinger ist auch bevorzugt, dass eine Eingriffskante zugeordnet einem Umfangsende des Klemmfingers, also einer einem weiteren, zweiten Klemmfinger in Umfangsrichtung zugewandten Flanke eines ersten Klemmfingers, den geringsten radialen Abstand zu der Längsachse aufweist. Die Eingriffsspitzen, bevorzugt zwei an einem Klemmfinger, sind entsprechend den Umfangs-Randbereichen oder exakt am Umfangs-Randbereich eines Klemmfingers zugeordnet ausgebildet.

Von den mehreren Klemmfingern kann die genannte Ausbildung bezüglich einer Eingriffskante an nur einem Klemmfinger, an mehreren oder allen Klemmfingern vorgesehen sein. Sie kann auch nur an einer von bevorzugt zwei in Einsteckrichtung hintereinander ausgebildeten Eingriffskanten vorgesehen sein. Weiter bevorzugt ist sie an allen Eingriffskanten vorgesehen.

Weiter ist auch bevorzugt, dass das Klemmteil an seinem den Halterungsausformungen in Axialrichtung abgewandten Endbereich einen nach innen ragenden Anschlagabsatz aufweist. Der Anschlagabsatz kann insbesondere dazu dienen, mit einem vorderen Ende des einzusteckenden Rohres zusammenzuwirken. Der Anschlagabsatz bildet einen Anschlag für das einzusteckende Rohr. Der Anschlagabsatz dient insbesondere auch zur Distanzierung zwischen dem Rohr und der Innenhülse, die allgemein auch als Fitting bezeichnet werden kann, insbesondere zur Verhinderung einer Kontaktkorrosion.

Weiter ist bevorzugt, dass das Klemmteil in Axialrichtung, gesehen von der Einsteckseite aus, jenseits des Anschlagabsatzes einen Fortsetzungsabschnitt aufweist. Der Anschlagabsatz bildet also nicht unbedingt einen Endbereich des Klemmteils. Der Fortsetzungsabschnitt ist allerdings auch bevorzugt in seiner Axialerstreckung deutlich kleiner ausgebildet als der sich in entgegengesetzter Richtung von dem Anschlagabsatz bis zum freien Ende des Klemmteils, insbesondere zum freien Ende der Klemmfinger erstreckende Bereich.

Der Fortsetzungsabschnitt kann rohrabschnittsförmig gebildet sein.

Bevorzugt ist auch, dass der Fortsetzungsabschnitt im Umfangsrichtung in Segmente unterteilt ist. Diese Segmente können durch in Axialrichtung des Klemmteils verlaufende, also den insbesondere Fortsetzungsabschnitt vollständig durchtrennende Ausnehmungen gebildet sein.

Eine axiale Länge des Fortsetzungsabschnittes kann bevorzugt einem Zwanzigstel bis einem Drittel des freien Durchmessers des Klemmteils in diesem Fortsetzungsabschnitt entsprechen.

Axiale Freiräume, welche die Segmente bilden, sind bevorzugt in Umfangsrichtung versetzt angeordnet zu axialen Zwischenräumen, welche die Klemmfinger voneinander sondern.
Ein axialer Freiraum, der zunächst die genannten Segmente hinsichtlich des Fortsetzungsabschnittes bildet, kann sich bevorzugt in Axialrichtung des Klemmteils, gesehen entgegen der Einsteckrichtung, bis in den Anschlagabsatz oder darüber hinaus erstrecken.
Die vor- und nachstehend angegebenen Bereiche bzw. Wertebereiche oder Mehrfachbereiche schließen hinsichtlich der Offenbarung auch sämtliche Zwischenwerte ein, insbesondere in 1/10-Schritten der jeweiligen Dimension, gegebenenfalls also auch dimensionslos, beispielsweise 1/10 der Länge, 1/10 des X-Fachen, 1/10 eines Winkels etc., einerseits zur Eingrenzung der genannten Bereichsgrenzen von unten und/ oder oben, alternativ oder ergänzend aber auch im Hinblick auf die Offenbarung eines oder mehrerer singulärer Werte aus einem jeweilige angegebenen Bereich.
Nachstehend ist die Erfindung des Weiteren anhand der beigefügten Zeichnungen, die jedoch lediglich Ausführungsbeispiele darstellt, erläutert. Hierbei zeigt:
- Fig. 1: eine Querschnittsansicht des Stecksystems, der nicht zur Erfindung gehört, mit eingestecktem Rohr;
- Fig. 2: eine Einzel-Querschnittsdarstellung der Innenhülse;
- Fig. 3: eine Querschnittsansicht des Klemmteils;
- Fig. 4: eine Ansicht des Klemmteils gemäß Fig. 3, gesehen in Richtung R in Fig. 3;
- Fig. 5: eine Seitenansicht des Klemmteil, ungeschnitten;
- Fig. 6: eine Querschnittsansicht der Außenhülse;
- Fig. 7: eine Querschnittsansicht einer in der Außenhülse oder der Innenhülse aufgenommenen Dichtung;
- Fig. 8: eine Querschnittsansicht des Steckverbindungssystems ohne eingestecktes Rohr;
- Fig. 9: eine perspektivische Ansicht der Außenhülse der Ausführungsform;
- Fig. 10: einen Längsquerschnitt durch die Außenhülse gemäß Figur 9; und
- Fig. 11: eine vergrößerte Darstellung des Bereichs XI - XI in Figur 10.

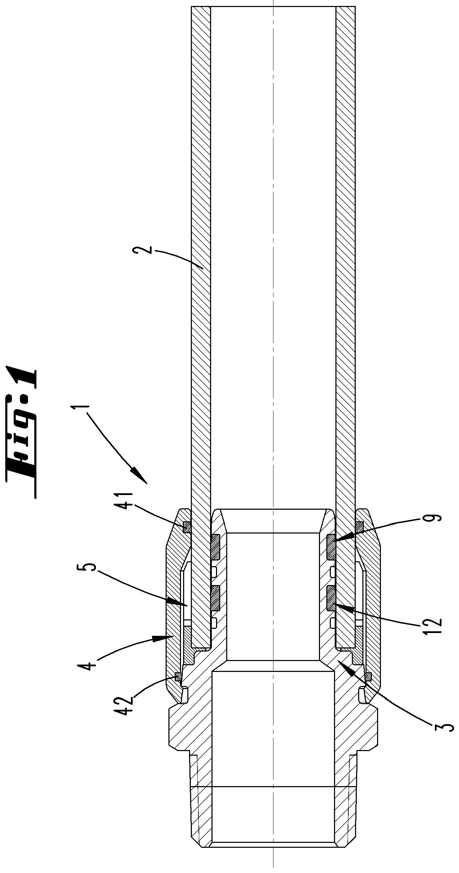

Dargestellt und beschrieben ist, zunächst mit Bezug zu Fig. 1, ein System 1 zur Steckverbindung mit einem Rohr 2, beispielsweise einem Kunststoff/Aluminiumverbundrohr, wobei das System 1 eine Innenhülse 3, die auch als Fitting bezeichnet werden kann, eine Außenhülse 4 und ein zwischen der Innenhülse 3 und der Außenhülse 4 angeordnetes Klemmteil 5 aufweist.

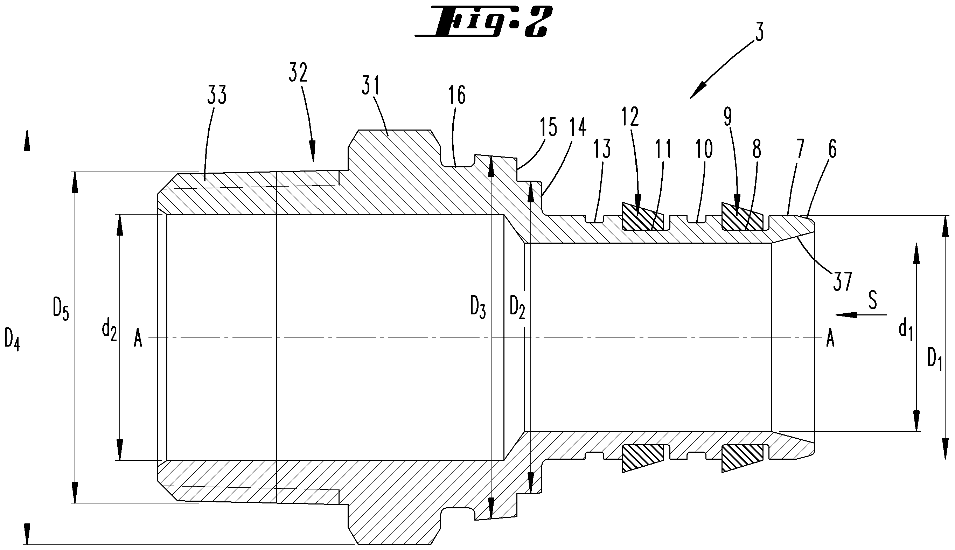

Die Innenhülse 3 ist in weiterer Einzelheit in Fig. 2 dargestellt. Sie weist in Steckrichtung, siehe Pfeil S, eine äußere Abschrägung 6 auf, um mit einer Innenfläche eines einzusteckenden Rohres günstig zusammenzuwirken. In Steckrichtung S folgt außenseitig an die Abschrägung 6 und einen sich bevorzugt zunächst anschließenden Abschnitt 7 konstanten ersten Außendurchmessers D1 eine erste Aufnahme 8 für eine erste darin gehalterte Dichtung 9 der Innenhülse. An die erste Aufnahme 8 schließt sich weiter in Steckrichtung S, bevorzugt gesondert durch einen weiteren Abschnitt konstanten Außendurchmesser, insbesondere desselben Außendurchmessers D1, bevorzugt eine Ausnehmung 10 an, die jedoch bevorzugt eine geringere radiale Tiefe aufweist als sie Aufnahme 8. Diese Ausnehmung 10 ist bevorzugt freiliegend, also ohne ein darin aufgenommenes Teil.

Wiederum bevorzugt gesondert zu der Ausnehmung 10 durch einen Abschnitt konstanten Außendurchmesser, auch hier insbesondere desselben Außendurchmessers D1, schließt sich sodann in Steckrichtung bevorzugt eine zweite Aufnahme 11 für eine zweite Dichtung 12 der Innenhülse an. Die Aufnahmen 8 und/oder 11 sind bevorzugt tiefergehende Aufnahmen als die Aufnahme 10, d.h. ihr Aufnahmeboden liegt auf einem geringeren Durchmessermaß als der Aufnahmeboden der Aufnahme 10.

Eine axiale Erstreckung der Aufnahme 8 und/ oder der Aufnahme 11 entspricht bevorzugt einem Zwanzigstel bis einem Drittel, weiter bevorzugt etwa einem Fünftel eines freien Innendurchmessers d1 der Innenhülse. In Absolutwerten kann die genannte axiale Länge etwa 2 bis 5mm entsprechen.

Dagegen entspricht eine axiale Länge einer Ausnehmung 10 bevorzugt etwa einem Viertel bis zwei Drittel der axialen Länge einer Aufnahme 8.

An die zweite Aufnahme 11 schließt sich in Steckrichtung S der Innenhülse 3, weiter bevorzugt unter Zwischenschaltung eines weiteren Bereiches konstanten Außendurchmessers, insbesondere desselben Außendurchmessers D1, eine weitere Ausnehmung 13 an. Diese Ausnehmung 13 kann in ihrer Gestaltung entsprechend der ersten Ausnehmung 10 gebildet sein.

Bevorzugt ist darüber hinaus, dass alle genannten Bereiche gleichen, konstanten Außendurchmessers der Innenhülse denselben konstanten Außendurchmesser aufweisen.

Dies betrifft auch einen sich an die zweite Ausnehmung 13 in Steckrichtung S weiter anschließenden Bereich konstanten Außendurchmessers, insbesondere also des Außendurchmessers D1, der Innenhülse.

An diesen weiteren Bereich konstanten Außendurchmessers schließt sich eine erste Stufenfläche 14 an, die bevorzugt rechtwinklig zu einer Längsachse A der Innenhülse 3 verläuft. Diese Stufenfläche 14 führt zu einer radialen Erweiterung der Außenfläche der Innenhülse 3. Das Erweiterungsmaß, das im Ausführungsbeispiel mit der Länge der Stufenfläche praktisch zusammenfällt, entspricht gegenüber einem zuvor genanten Bereich konstanten Durchmessers D1 bevorzugt etwa einem Drittel bis einem Zehntel, weiter bevorzugt in Absolutwerten etwa 3 bis 8mm, jeweils bezogen auf ein Durchmessermaß.

An diese erste Stufenfläche 14 schließt sich wiederum in Steckrichtung S ein Bereich konstanten Außendurchmessers D2 an, der dem Außendurchmessermaß der Stufenfläche 14 bevorzugt entspricht. Daran schließ sich eine zweite Stufenfläche 15 an, die in einen Bereich bevorzugt stetig ansteigenden Außendurchmessers D3 übergeht. Dieser Bereich stetig ansteigenden Außenurchmessers D3 bildet also eine Auflaufschräge, wie sie nachstehend als besonders vorteilhaft im Hinblick auf das Aufsetzen der Außenhülse erläutert ist. Die zweite Stufenfläche 15 weist, bezogen auf den Außendurchmesser am radial äußeren Ende der Stufenfläche 15, ein Erweiterungsmaß auf, das ein 1/20 bis 3/10 des Außendurchmesser D2 entspricht.

An diesen Bereich stetig ansteigenden Außendurchmessers schließt sich eine weitere Ausnehmung 16 an. Die Ausnehmung 16 geht dann bevorzugt in einen einen größten Außendurchmesser D4 aufweisenden Flanschbereich 31 der Innenhülse über, der weiter bevorzugt auch außenseitig entsprechend Schraubenschlüssel-Betätigungsflächen abgeflachte, jeweils einen stumpfen Winkel im Querschnitt unter sich einschließenden Betätigungsflächen aufweist. Insofern ist D4 als mittlerer Außendurchmesser zu verstehen.

Der sich in Steckrichtung an die Ausnehmung 16 anschließende Bereich ist hier nach einer Ausführungsform als Mehrkant ausgebildet. Es können aber auch andere Ausführungsformen, eine T-Ausformung bspw., vorgesehen sein. Hier werden solche Ausformungen bevorzugt vorgesehen, wie sie üblicherweise bei Fittings gegeben sind.

An den Flanschbereich 31 schließt sich weiterhin in Steckrichtung S ein Anschlussbereich 32 für ein weiteres Funktionsteil wie etwa ein Ventil oder einen Hahn oder einen weiteren Verbindungsabschnitt an, der bevorzugt mit einem Außengewinde 33 ausgebildet ist. Der Anschlussbereich 32 weist einen Außendurchmesser D5 auf, der bevorzugt kleiner ist als der Außendurchmesser D4 jedoch größer als der Außendurchmesser D1.

Auch dieser Anschlussbereich kann entsprechend den Üblichkeiten bei Fittings abgeändert ausgebildet sein.

Der Inndurchmesser d1 ist bevorzugt konstant, in Steckrichtung S, beginnend mit einem Ende der Abschrägung 6 bzw. der dieser innen entsprechenden Verjüngung 37, weiter beginnend bevorzugt innenseitig zugeordnet einem Ende des Abschnittes 7 und sich erstreckend bis zu dem Bereich, bevorzugt etwas darüber hinaus, in Streckrichtung S, an welchem außenseitig die Stufenfläche 14 ausgebildet ist. In dem Bereich, in welchem außenseitig sich an die Stufenfläche 14 ein Bereich konstanten Außendurchmessers anschließt, erweitert sich der Innendurchmesser d1 bevorzugt auf einen größeren Innendurchmesser d2. Der Innendurchmesser d2 kann hierbei 10 bis 50 %, bevorzugt ca. 30 %, größer sein als der Innendurchmesser d1.

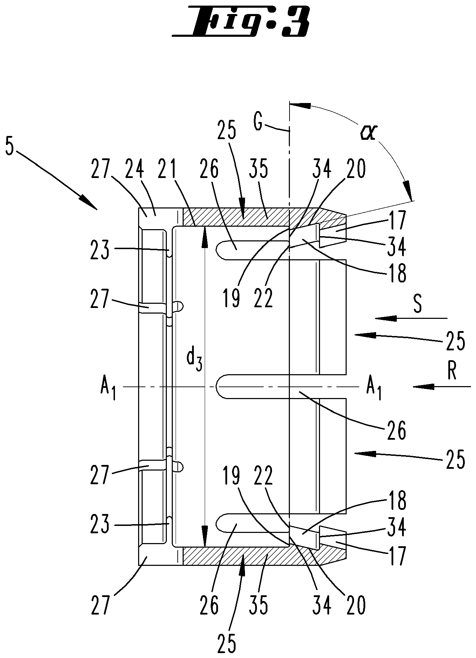

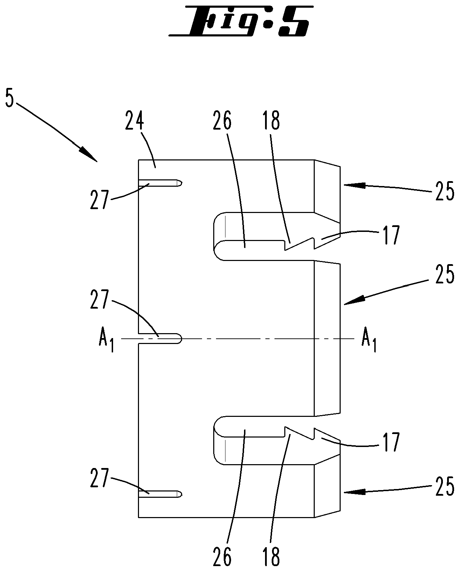

Mit Bezug zu den Fig. 3 bis 5 ist das Klemmteil 5 beschrieben.

Das Klemmteil 5 ist grundsätzlich rohrartig gebildet, weist jedoch insbesondere zwei Bereiche auf, die gegenüber dem ansonsten gegebenen Rohrinnendurchmesser d3 nach innen vorstehen.

Dies sind zum einen in Steckrichtung S die zunächst ausgebildeten, bevorzugt zweifach hintereinander vorgesehenen, Halterungsausformungen 17,18, die ersichtlich hier zahnartig, nämlich insbesondere sägezahnartig, gebildet sind.

Eine Halterungsausformung 17,18 weist bezogen auf eine Gerade G, die zu einer Längsachse A1 des Klemmteils 5 senkrecht und durch eine Spitze 34 der Halterungsausformung 17,18 verläuft, zwei unterschiedliche Flanken 19, 20 auf. Die in Steckrichtung erste Flanke ist die flacher verlaufende Flanke 20. Sie schließt mit der genannten Geraden G einen spitzen Winkel α von bevorzugt 30 bis 85° ein, weiter bevorzugt ca. 70 bis 85° ein.

Die zweite, steilere Flanke 19 schließt beim Ausführungsbeispiel bevorzugt mit der Geraden G einen Winkel von 0° ein, verläuft also in der Geraden G.

Sie kann aber auch einen weiteren spitzen Winkel mit der Geraden G einschließen, der entgegengesetzt zu dem Winkel α dann an der Geraden G abgegriffen ist und sich beispielsweise zwischen 10 und 60° bewegt.

Die Halterungsausformungen 17, 18 erstrecken sich bezogen auf die Schnitteben der Querschnittsdarstellung quer zu der genannten Mittelachse A1, d.h. gegenüber der ansonsten gegebenen Innenfläche 21 des Halterungsteils 5 nach innen vorragend. Bezüglich der Zahnausbildungen ist die Spitze 34 der am weitesten nach innen ragende Bereich.

Jedenfalls eine Zahnspitze 34, bevorzugt auch ein weiterer Bereich der Halterungsausformung, ragt damit gegenüber der Innenwandung 21 bevorzugt nach innen vor.

Das Vorragen der Zahnspitze 34 bzw. ggf. auch eines weiteren Bereichs der Halterungsausformung bezieht sich jedenfalls auf einen sich an einer Halterungsausformung 17, 18 in Steckrichtung S zunächst anschließenden Wandbereich 35. Dieser sich anschließende Wandbereich 35, gegenüber welchem die genannten Charakterisierung zutreffend ist, erstreckt sich jedenfalls über eine axiale Länge des Klemmteils, die einem Fünftel bis zum Zweifachen des freien Durchmessers d3 des Klemmteils 5 in diesem Bereich entspricht. An den genannten Wandbereich 35 schließt sich sodann ein Anschlagabsatz 23 an. Der Anschlagabsatz 23 ragt vergleichbar den Halterungsausformungen 17, 18, jedoch bevorzugt im unbeeinflussten Zustand der Halterungsausformungen 17, 18 weiter als die Halterungsausformungen 17,18, in das Innere des Klemmteils hinein vor. Er dient als Anschlag für ein Stirnende eines einzusteckenden und steckzuhalternden Rohres, bzw. zur Verhinderung von Kontaktkorrosion.

Weiter ist bevorzugt vorgesehen, dass die Halterungsausformungen 17,18 an einer Mehrzahl von in Umfangsrichtung einzeln gebildeten Klemmfingern 25 ausgebildet sind. Ein Klemmfinger 25 ist durch einen axialen Zwischenraum 26 gegeben, der also einen entsprechenden Umfangs-Freiraum darstellt. Die axiale Länge des Zwischenraums 26 ist bevorzugt kleiner als es der axialen Länge von einer einsteckseitigen Spitze des Klemmteils 5 bis zu dem Anschlagabschnitt 23 entspricht. Bevorzugt entspricht diese Länge etwa einem Drittel bis neun Zehntel der genannten Länge bis zu dem Anschlagabschnitt 23.

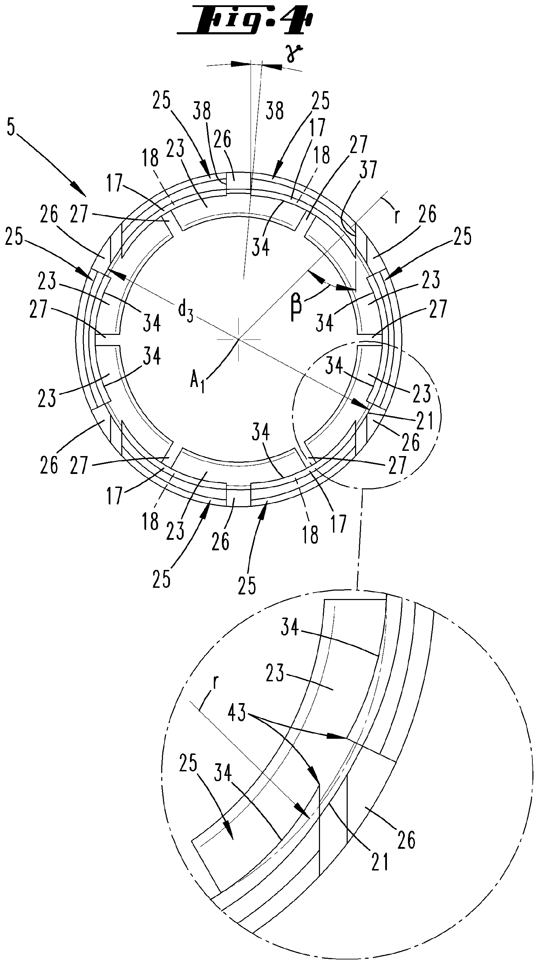

Eine Zahnspitze 34 ist ersichtlich, wie auch aus Figur 4 hervorgeht, in Umfangsrichtung gesehen eine Eingriffskante. Wie aus der Lupendarstellung der Figur 4 ersichtlich, weist diese bevorzugt über ihre Länge, in Umfangsrichtung gesehen, unterschiedlichen radialen Abstand r zu der Mittelachse A1 auf. So sind an einem Klemmfinger 25 ein oder zwei Spitzenbereiche 43 geschaffen, die zudem, bezogen auf die in der Lupendarstellung ersichtlichen Klemmfinger 25, an einem Umfangsende eines Klemmfingers 25 ausgebildet sind.

Alle Eingriffskanten der Klemmfinger 25 zusammengefasst (bezüglich einer Ebene senkrecht zu der Mittelachse A1) können bspw. einer Ovallinie folgend gebildet sein.

Jenseits des Anschlagabsatzes 23, weiter in Steckrichtung S, schließt sich ein Fortsetzungsabschnitt 24 an. Der Fortsetzungsabschnitt 24 ist bevorzugt auch rohr- bzw. zylinderartig gebildet, weist jedoch bevorzugt eine gegenüber dem entgegen der Steckrichtung S von dem Anschlagabschnitt 23 sich erstreckenden Bereich wesentlich kürzere Länge auf. Sie entspricht bevorzugt einem Zwanzigstel bis einem Zehntel des freien Durchmessers d3. Ein freier Innendurchmesser des Fortsetzungsabschnitts 24 kann gleich dem Innendurchmesser d3 sein oder beispielsweise bis zu 10 % kleiner.

Die genannten Eingriffskanten 34 weisen bevorzugt zugeordnet ihrem Umfangsende bei einem oder mehreren oder allen einzelnen Klemmfingern 25 den genannten geringsten Abstand zur Mittelachse A1 auf, wie dies auch aus der Lupendarstellung der Figur 4 hervorgeht.

Auch der Fortsetzungsabschnitt 24 ist bevorzugt in Umfangsrichtung unterbrochen, nämlich durch Zwischenräume 27. Ein Zwischenraum 27 erstreckt sich in axialer Länge, ausgehend von dem den einsteckseitigen Ende des Klemmteils 5 entgegengesetzten Ende, über eine Länge, welche mindestens der freien Länge, also d.h. der Länge bis zum Anschlagabschnitt 23, des Forstsetzungsanschnitts entspricht. Weiter bevorzugt erstrecken sie sich darüber hinaus, jedoch darüber hinaus bevorzugt nicht bis in eine Umfangs-Überdeckung zu einem Zwischenraum 26. Aus der Darstellung der Figur 4 ist ersichtlich, dass insgesamt über den Umfang 6 Klemmfinger 25 ausgebildet sind.

Weiter ist auch ersichtlich, dass bevorzugt bei einem oder mehreren der Klemmfinger eine Umfangsrichtung weisende Seitenfläche 37 ausgebildet ist, die schräg zu einer Radialen r verläuft, d. h. mit einer Radialen r einen spitzen Winkel β einschließt, der beispielsweise 40 bis 80° betragen kann. Weiter bevorzugt ist bei einem Klemmfinger 25 eine (weitere) Seitenfläche 38 geradlinig verlaufend ausgebildet, d. h. auch abweichend von einer Radialen aber einen wesentlich kleineren spitzen Winkel γ mit einer Radialen einschließend, der bevorzugt im einstelligen Gradbereich, beispielsweise zwischen 0,5 und 9,5°, ausgebildet ist.

Weiter bevorzugt ist, dass eine Seitenfläche 37 eines ersten Klemmfingers 25 in Umfangsrichtung einer Seitenfläche 38 eines zweiten Klemmfingers 25 gegenüberliegt.

Weiter bevorzugt ist einer oder mehrerer der Klemmfinger 25 mit zwei Seitenflächen 38 ausgebildet, wobei jede dieser Seitenflächen 38 einer Seitenfläche 37 eines weiteren Klemmfingers 25 in Umfangsrichtung gegenüberliegt.

Diese unterschiedliche Ausgestaltung der Klemmfinger hat insbesondere Vorteile im Hinblick auf ein Einführen und ggf. Drehen des zu klemmenden Rohres.

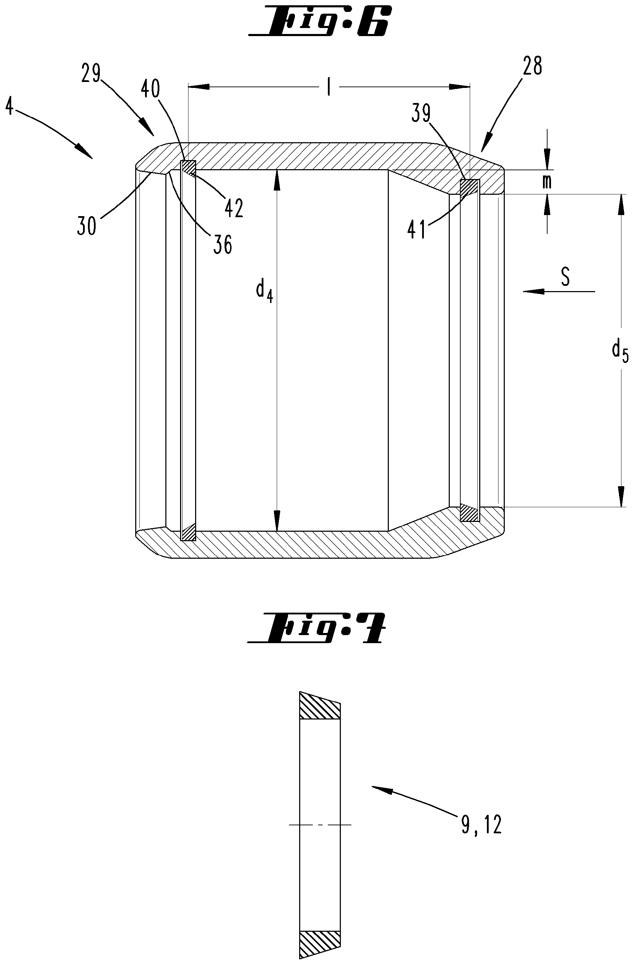

Mit Bezug zu Fig. 6 ist die Außenhülse 4 in einer ersten Ausführungsform in weiterer Einzelheit dargestellt und beschrieben.

Die Außenhülse 4 ist ebenfalls ausgehend von einem rohrförmigen Teil gebildet. Sie weist in Steckrichtung S gesehen zunächst einen vorderen Einschnürungsabschnitt 28 auf. Der Einschnürungsabschnitt 28 ist gegenüber einem freien Innendurchmesser d4, der sich ein unbeeinflussten rohrförmigen Abschnitt der Außenhülse 4 bezieht, um ein Maß m eingezogen, das einem Hundertstel bis einem Drittel des genannten Durchmessers d4 entspricht. Absolut gesehen kann die Einziehung 2 bis 8mm betragen, auf den hierdurch im engsten Bereich gegebenen Durchmesser d5 bezogen, also einem doppelten Wert.

Am gegenüberliegenden Ende weist die Außenhülse 4 einen Auflaufabschnitt 29 auf, der sich durch eine Auflaufschräge 30 auszeichnet, die in Steckrichtung S sich erweiternd gebildet ist. Die Auflaufschräge 30 beginnt etwa mit dem Innendurchmesser d4 und endet (entgegen der Steckrichtung S betrachtet) innerhalb des Außendurchmessers D3. Sie dient im Hinblick auf das Gesamtsystem zum Auflaufen und Einrasten der Außenhülse 4 auf die Innenhülse 3, nämlich zum Auflaufen auf die zufolge des zunehmenden Durchmessers D3 gegebene Schräge vor der Ausnehmung 16. Mit der hülseninnenseitig ausgebildeten Stufenfläche 36 rastet die Außenhülse 4 in die Ausnehmung 16 ein.

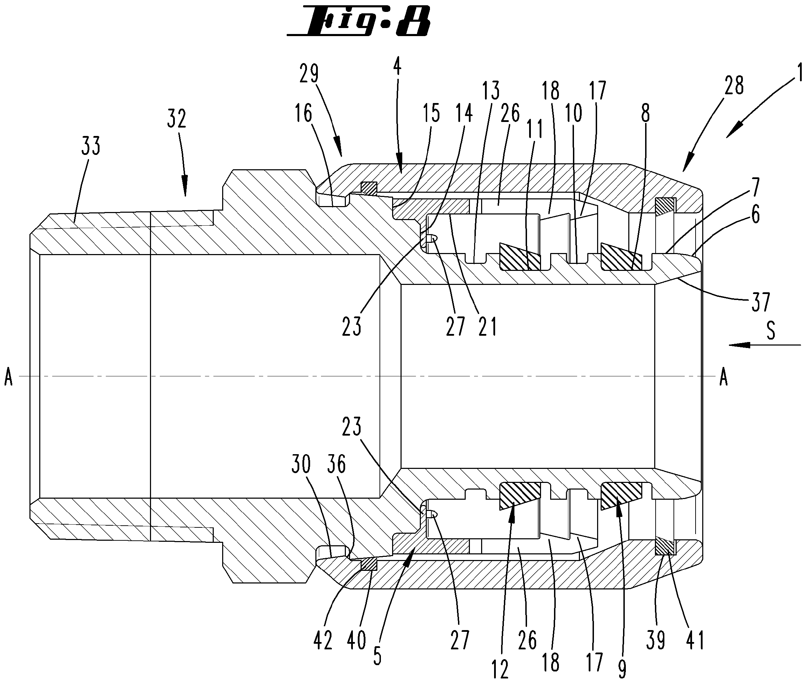

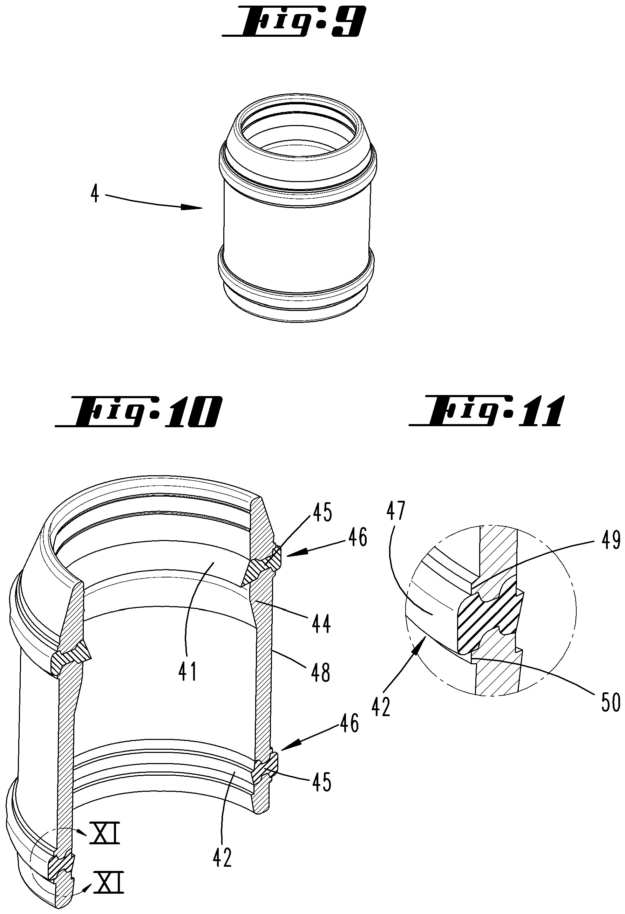

Wie weiter ersichtlich, sind in der Außenhülse 4 innenseitig zwei in Einsteckrichtung S beabstandete nutartige Ausnehmungen 39, 40 ausgebildet. In diesen nutartigen Ausnehmungen ist bevorzugt jeweils im zusammengebauten Zustand, siehe etwa Figur 8 oder Figur 1, eine umfangsmäßige umlaufende Dichtung 41, 42 aufgenommen. Auch wie im Weiteren hier noch ausgeführt, kann es sich um übliche O-Ringe handeln oder Dichtungen in der besonderen Gestaltung, wie sie hier beschrieben sind. Die Dichtungen können, soweit es sich um Kunststoffteile handelt, in einer bevorzugten Ausführungsform, siehe auch nachstehende Erläuterungen zu den Figuren 9 bis 11, auch unmittelbar, etwa im Zweikomponenten-Spritzverfahren, angespritzt sein.

Beim Ausführungsbeispiel der Figur 6 ist ersichtlich, dass die Dichtungen 41, 42 im Querschnitt zahnförmig gebildet sind. Hierbei ist eine steile Flanke und eine flache Flanke verwirklicht. Die flache Flanke ist beim Ausführungsbeispiel der Figur 6 bezogen auf die in Steckrichtung S erste Dichtung 41 vorderseitig ausgebildet, dagegen die steile Flanke rückseitig. Bei der in Steckrichtung S folgenden Dichtung 40 ist die steile Flanke in Einsteckrichtung vorderseitig und die flache Flanke in Einsteckrichtung rückseitig ausgebildet.

Dies ist besonders vorteilhaft im Hinblick auf eine Aufschiebung der Außenhülse auf die Innenhülse in den Zustand gemäß Figur 4, da bei diesem Aufschieben das einzusteckende Rohr noch nicht vorhanden ist, aber die flache Flanke dann günstig an der Schrägfläche des Durchmesser D3 aufgleiten kann.

Die Dichtungen 41, 42 sind unabhängig von ihrer Ausgestaltung in Steckrichtung S bevorzugt mit axialen Länge l beabstandet, die größer ist als eine axiale Erstreckung des Klemmteils. So ist es möglich, wie sich aus Figur 1 und Figur 8 ergibt, dass das Klemmteil 5 im zusammengesetzten Zustand vollständig zwischen den Dichtungen 39, 40 angeordnet ist.

Im Anschluss an die Dichtung 40 in Steckrichtung schließt sich die genannte Auflaufschräge 30 der Auflaufhülse an. Aufgrund der Stufenfläche 36 ergibt sich die beschriebene Einrastung im Zusammenbauzustand gemäß Figur 8. Hierbei kann vorgesehen sein, dass im zusammengesetzten Zustand in diesem Bereich der Außenhülse eine gewisse Aufweitung gegeben ist, die zusätzlich eine elastische Vorspannung in die so gegebene Steckstellung ergibt.

Eine axiale Abmessung der Auflaufschräge 30, projiziert auf eine Mittelachse der Außenhülse, entspricht bevorzugt der axialen Länge der Ausnehmung 16.

Mit Bezug zu Figur 7 ist der Querschnitt einer Dichtung dargestellt, die hier im Bezug auf die Anbringung auf der Innenhülse wiedergegeben ist.

Ersichtlich ist die Dichtung kreisringförmig gebildet, wobei die genannten Flanken und die Spitze ersichtlich sind. Die Spitze weist ins Innere, wenn es sich um eine innenseitig der Außenhülse angebrachte Dichtung handelt.

Diese Dichtungen sind weiter aus der in Figur 8 dargestellten Steckverbindung ohne eingestecktes Rohr ersichtlich. Bis auf die dem erweiterten Außendurchmesser D4 zugeordnete Dichtung sind die Dichtungen jeweils im entspannten Zustand dargestellt, da eben kein Rohr eingesteckt ist.

Eine oder mehrere oder auch alle Dichtungen der Außenhülse und/oder der Innenhülse können anstatt der bevorzugt beschriebenen im Querschnitt zahnförmigen Gestaltung auch als übliche im Querschnitt runde Dichtungen (O-Ringe) ausgebildet sein. In diesem Fall können auch Dichtungen mit einem entsprechend runden Querschnitt angespritzt sein, also auch im Zweikomponenten-Spritzverfahren mit der Außenhülse als solcher verbunden sein.

Mit Bezug zu den Figuren 9 bis 11 ist eine weitere Ausführungsform der Außenhülse dargestellt, wie sie bevorzugt zur Anwendung kommen soll.

Bevorzugt ist, wie auch schon zu der ersten Ausführungsform angemerkt, dass die erste und/oder zweite Dichtung 41, 42 mit der Außenhülse, die auch bevorzugt, unabhängig auch von den speziellen Ausgestaltungen der ersten oder zweiten Ausführungsform, ein Kunststoffteil ist, fest verbunden sind.

Der Dichtwerkstoff der ersten und/oder zweiten umlaufenden Dichtung 41, 42 kann an mindestens einer Stelle, beim Ausführungsbeispiel sind es jeweils bevorzugt über den Umfang gesehen sechs Stellen, die Wandung 44 der Außenhülse 4 durchsetzen. Es ergeben sich somit Verbindungsabschnitte 45 zwischen einem Außenbereich 46 des Dichtwerkstoffes, der bevorzugt auf der Außenfläche der Außenhülse 4 frei liegt und der ersten oder zweiten inneren umlaufenden Dichtung 41, 42.

Schon hierdurch ergibt sich, gleichsam durch Formschluss, eine feste Verbindung zwischen der Außenhülse 4 und der ersten und/oder zweiten inneren umlaufenden Dichtung 41, 42.

Insbesondere dann, wenn, wie auch bevorzugt, der Dichtwerkstoff an der Außenseite der Dichthülse 4 einen Stoßvorsprung, sei es durch einen inselartigen Außenbereich 46 oder durch einen umlaufenden Stoßvorsprung 47, bildet, ist gleichsam die innere umlaufende Dichtung vollständig gefangen an der Außenhülse 4. Sie kann nur durch Zerstörung entnommen werden.

Ein Stoßvorsprung 47 kann sich über eine umgebende Erstreckung einer Außenfläche 48 der Außenhülse 4 erheben. Beispielsweise um ein Maß, das ¹/₁₀₀ oder mehr, etwa bis hin zu ¹/₁₀ oder ²/₁₀ oder sogar bis zu ¹/₅ oder ¹/₄ des Innendurchmessers D4 entspricht.

Die auch bei der Ausführungsform der Figuren 9 bis 11 ersichtliche sägezahnartige Gestaltung der ersten umlaufenden Dichtung 41 ist bereits in Bezug auf die vorher beschriebene Ausführungsform der Außenhülse 4 im Einzelnen charakterisiert. Hierauf wird verwiesen.

Desgleichen auf die umlaufend entgegengesetzte gezahnte Ausgestaltung der zweiten umlaufenden Dichtung 42.

Bevorzugt ist insoweit auch, dass bezüglich eines Außenbereichs 46 oder konkret eines Stoßvorsprungs 47 der zweiten umlaufenden Dichtung 42 die aus einem gegenüber dem Dichtwerkstoff bevorzugt aus einem Hartkunststoff bestehende Außenhülse 4 im Übrigen wulstförmige, bevorzugt umlaufende Erhebungen 49, 50 aufweist, die sich auch über die Außenfläche der Außenhülse im Übrigen erheben. In Radialrichtung erstrecken sie sich über einen Teil der Überstandshöhe des Außenbereichs 46 bzw. des Stoßvorsprungs 47. Sie bieten eine zusätzliche Schutzanordnung für den Dichtwerkstoff im Außenbereich.

Der Dichtwerkstoff einer Dichtung 41, 42 kann ein thermoplastisches Elastomer (TPE) sein.

**Bezugszeichenliste**

| | | | |
|---|---|---|---|
| 1 | System | 26 | Zwischenraum |
| 2 | Rohr | 27 | Zwischenraum |
| 3 | Innenhülse | 28 | Einschnürungsabschnitt |
| 4 | Außenhülse | 29 | Auflaufabschnitt |
| 5 | Klemmteil | 30 | Auflaufschräge |
| 6 | Abschrägung | 31 | Flansch |
| 7 | Abschnitt | 32 | Anschlussbereich |
| 8 | Aufnahme | 33 | Außengewinde |
| 9 | Dichtung | 34 | Spitze |
| 10 | Ausnehmung | 35 | Wandbereich |
| 11 | Aufnahme | 36 | Stufenfläche |
| 12 | Dichtung | 37 | Seitenfläche |
| 13 | Ausnehmung | 38 | Seitenfläche |
| 14 | Stufenfläche | 39 | Ausnehmung |
| 15 | Stufenfläche | 40 | Ausnehmung |
| 16 | Ausnehmung | 41 | Dichtung |
| 17 | Halterungsausformung | 42 | Dichtung |
| 18 | Halterungsausformung | 43 | Spitzenbereiche |
| 19 | Flanke | 44 | Wandungsbereich |
| 20 | Flanke | 45 | Verbindungsbereich |
| 21 | Innenfläche | 46 | Außenbereich |
| 22 | Zahnspitze | 47 | Stoßvorsprung |
| 23 | Anschlagabsatz | 48 | Außenfläche |
| 24 | Fortsetzungsabschnitt | 49 | Erhebung |
| 25 | Klemmfinger | 50 | Erhebung |
| α | Winkel | | |
| β | Winkel | | |
| γ | Winkel | | |
| D1 | Außendurchmesser | | |
| D2 | Außendurchmesser | | |
| D3 | Außendurchmesser | | |
| D4 | Außendurchmesser | | |
| D5 | Außendurchmesser | | |
| d1 | Innendurchmesser | | |
| d2 | Innendurchmesser | | |
| d3 | Innendurchmesser | | |
| d4 | Innendurchmesser | | |
| d5 | Innendurchmesser | | |
| a | Abstand | | |
| r | Radiale | | |
| S | Steckrichtung | | |

## Patentansprüche

1. System (1) zur Steckverbindung von Rohren (2), mit einer Innenhülse (3) und einer Außenhülse (4), wobei ein zu verbindendes Rohr (2) auf der Innehülse (3) aufsitzt und wobei zwischen der Innenhülse (3) und der Außenhülse (4) ein Klemmteil (5) angeordnet ist, wobei weiter die Innen- und Außenhülse (3,4) und das Klemmteil (5) eine in Einsteckrichtung (S) gegebene axiale Länge aufweisen und weiter wobei die Außenhülse (4) einsteckseitig eine, erste, aus einem zu einem Werkstoff der Außenhülse (4) unterschiedlichen Dichtwerkstoff bestehende umlaufende Dichtung (41) aufweist zur Zusammenwirkung mit einer Außenfläche des eingeschobenen Rohres und wobei die umlaufende Dichtung (41) mit der Wandung (44) fest verbunden ist, wobei der Dichtwerkstoff der umlaufenden Dichtung (41, 42) zumindest an einer Stelle die Wandung (44) der Außenhülse (4) durchsetzt und im Kunststoffspritzverfahren eingebracht ist, wobei die Außenhülse (4) in Einsteckrichtung des Rohres (2) nach der ersten Dichtung (41) eine zweite umlaufende Dichtung (42) zur Zusammenwirkung mit einer Außenfläche des eingeschobenen Rohres (2) aufweist, wobei der Dichtstoff der zweiten umlaufenden Dichtung (42) zumindest an einer Stelle die Wandung (44) der Außenhülse (4) durchsetzt und wobei die zweite umlaufende Dichtung (42) mit der Wandung (44) der Außenhülse (4) fest verbunden ist, und im Kunststoffspritzverfahren eingebracht ist, und wobei mit der ersten und der zweiten Dichtung materialeinheitlich integral ein Stoßschutzvorsprung ausgebildet ist, der sich in radialer Richtung über eine Außenfläche der Außenhülse erhebt.

2. System nach einem der vorhergehenden Ansprüche, **dadurch gekennzeichnet, dass** eine Dichtung (41, 42) der Außenhülse (4) im Querschnitt zahnartig gebildet ist.

3. System nach Anspruch 2, **dadurch gekennzeichnet ist, dass** jedenfalls die erste Dichtung (41) der Außenhülse (4) im Querschnitt bezogen auf die Einsteckrichtung (S) eine steilere und eine flache Flanke aufweist.

4. System nach Anspruch 3, **dadurch gekennzeichnet, dass** die flachere Flanke der in Einsteckrichtung ersten Dichtung (41) der Außenhülse (4) die in Einsteckrichtung (S) erste Flanke ist.

5. System nach einem der Ansprüche 2 bis 4, **dadurch gekennzeichnet, dass** die steilere Flanke der in Einsteckrichtung ersten Dichtung (41) der Außenhülse (4) bezog auf eine Längsachse der Außenhülse (4) rechtwinklig verläuft.

6. System nach Anspruch 5, **dadurch gekennzeichnet, dass** die flachere Flanke der in Einsteckrichtung zweiten Dichtung (42) der Außenhülse (4) die in Einsteckrichtung zweite Flanke ist.

7. System nach einem der vorhergehenden Ansprüche, **dadurch gekennzeichnet, dass** die Dichtung (9,12) der Innenhülse (3) im Querschnitt bezogen auf die Einsteckrichtung (S) eine steilere und eine flachere Flanke aufweist und dass die flachere Flanke der Dichtung (9,12) der Innenhülse (3) die in Einsteckrichtung erste Flanke ist.

8. System nach Anspruch 7, **dadurch gekennzeichnet, dass** die steilere Flanke der Dichtung (9,12) der Innenhülse (3) bezogen auf eine Längsachse der Innenhülse (3) rechtwinkelig verläuft.

## Claims

1. System (1) for connecting pipes (2) in an inserted manner, comprising an inner sleeve (3) and an outer sleeve (4), wherein a pipe (2) to be connected rests on the inner sleeve (3) and a clamping part (5) is arranged between the inner sleeve (3) and the outer sleeve (4), wherein the inner and outer sleeve (3, 4) and the clamping part (5) also have a given axial length in the insertion direction (S) and wherein the outer sleeve (4) also has on the insertion side a first circumferential seal (41) which is made of a sealing material that is different from a material of the outer sleeve (4) and which is intended for interacting with an outer surface of the pushed-in pipe, and wherein the circumferential seal (41) is rigidly connected to the wall (44), wherein the sealing material of the circumferential seal (41, 42) penetrates the wall (44) of the outer sleeve (4) at least in one place and is introduced in the plastics injection-moulding process, wherein the outer sleeve (4) has a second circumferential seal (42) which is downstream of the first seal (41) in the insertion direction of the pipe (2) and is intended for interacting with an outer surface of the pushed-in pipe (2), wherein the sealant of the second circumferential seal (42) penetrates the wall (44) of the outer sleeve (4) at least in one place and wherein the second circumferential seal (42) is rigidly connected to the wall (44) of the outer sleeve (4), and is introduced in the plastics injection-moulding process, and wherein an impact protection projection is integrally formed with the first and the second seal in a materially uniform manner and rises above an outer surface of the outer sleeve in the radial direction.

2. System according to any of the preceding claims, **characterised in that** a seal (41, 42) of the outer sleeve (4) has a dentiform cross section.

3. System according to claim 2, **characterised in that**, in any case, the first seal (41) of the outer sleeve (4) has a steeper edge and a flat edge in cross section in relation to the insertion direction (S).

4. System according to claim 3, **characterised in that** the flatter edge of the first seal (41) of the outer sleeve (4) in the insertion direction is the first edge in the insertion direction (S).

5. System according to any of claims 2 to 4, **characterised in that** the steeper edge of the first seal (41) of the outer sleeve (4) in the insertion direction extends at a right angle in relation to a longitudinal axis of the outer sleeve (4).

6. System according to claim 5, **characterised in that** the flatter edge of the second seal (42) of the outer sleeve (4) in the insertion direction is the second edge in the insertion direction.

7. System according to any of the preceding claims, **characterised in that** the seal (9, 12) of the inner sleeve (3) has a steeper edge and a flatter edge in cross section in relation to the insertion direction (S), and **in that** the flatter edge of the seal (9, 12) of the inner sleeve (3) is the first edge in the insertion direction.

8. System according to claim 7, **characterised in that** the steeper edge of the seal (9, 12) of the inner sleeve (3) extends at a right angle in relation to a longitudinal axis of the inner sleeve (3).

## Revendications

1. Système (1) pour le raccordement de tubes (2) par emboîtement, comprenant une douille intérieure (3) et un manchon extérieur (4), dans lequel un tube (2) à raccorder est placé sur la douille intérieure (3) et dans lequel une pièce de serrage (5) est agencée entre la douille intérieure (3) et le manchon extérieur (4), dans lequel en outre la douille intérieure et le manchon extérieur (3, 4), ainsi que la pièce de serrage (5) présentent une longueur axiale suivant la direction d'emboitage (S) et dans lequel en outre le manchon extérieur (4) présente, du côté d'emboîtage, un premier joint périphérique (41) destiné à coopérer avec une surface externe du tube inséré et qui est réalisé dans un matériau de joint qui est différent du matériau du manchon extérieur, et dans lequel le joint périphérique (41) est lié fermement à la paroi (44), dans lequel le matériau du joint périphérique (41, 42) traverse la paroi (44) du manchon extérieur (4) au moins à un endroit et y est introduit lors du processus d'injection de matière plastique, dans lequel le manchon extérieur (4) présente, après le première joint (41) suivant la direction d'emboitage, un deuxième joint périphérique (42) destiné à coopérer avec la surface externe du tube inséré (2), dans lequel le matériau du deuxième joint périphérique (42) traverse la paroi (44) du manchon extérieur (4) au moins à un endroit et dans lequel le deuxième joint périphérique (42) est lié fermement à la paroi (44) du manchon extérieur (44) et y est introduit lors du processus d'injection de matière plastique, et dans lequel il est formé une saillie de protection contre les chocs qui vient intégralement de matière avec le premier et le deuxième joint et qui s'étend, suivant la direction radiale, au-dessus d'une surface externe du manchon extérieur.

2. Système selon l'une des revendications précédentes, **caractérisé en ce qu'**un joint (41, 42) du manchon extérieur (4) est réalisé, en section transversale, en forme de dent.

3. Système selon la revendication 2, **caractérisé en ce qu'**au moins le premier joint (41) présente, en section transversale par rapport à la direction d'emboitage (S), un flanc plus raide et un flanc plat.

4. Système selon la revendication 3, **caractérisé en ce que** le flanc plus plat du premier joint (41) du manchon extérieur (4) dans la direction d'emboitage est le premier flanc dans la direction d'emboitage (S).

5. Système selon l'une des revendications 2 à 4, **caractérisé en ce que** le flanc plus raide du premier joint (41) du manchon extérieur (4) dans la direction d'emboitage s'étend de manière perpendiculaire par rapport à un axe longitudinal du manchon extérieur (4).

6. Système selon la revendication 5, **caractérisé en ce que** le flanc plus plat du deuxième joint (42) du manchon extérieur (4) dans la direction d'emboitage est le deuxième flanc dans la direction d'emboitage.

7. Système selon l'une des revendications précédentes, **caractérisé en ce que** le joint (9, 12) de la douille intérieure (3) présente, en section transversale suivant la direction d'emboitage (S), un flanc plus raide et un flanc plus plat et que le flanc plus plat du joint (9, 12) de la douille intérieure (3) dans la direction d'emboitage est le premier flanc dans la direction d'emboitage (S).

8. Système selon la revendication 7, **caractérisé en ce que** le flanc plus raide du joint (9, 12) de la douille intérieure (3) s'étend de manière perpendiculaire par rapport à un axe longitudinal de la douille intérieure (3).
